# EUROPEAN PATENT SPECIFICATION

(11) **EP 0 347 826 B1**
(45) Date of publication and mention of the grant of the patent: **06.10.1993**
(21) Application number: 89111163.5
(22) Date of filing: 20.06.1989
(51) Int. Cl.: C08J 5/04, C08L 27/12

(54) **Structural composites of fluoropolymers reinforced with continuous filament fibers**
Mit Endlosfaden verstärkte Verbundgegenstände von Fluorpolymeren
Articles composites de polymères fluorés renforcés par des filaments continus

(30) Priority: 20.06.1988 US 209085
(43) Date of publication of application: 27.12.1989
(73) Proprietor: E.I. DU PONT DE NEMOURS AND COMPANY, Wilmington Delaware 19898 (US)
(72) Inventor: Gentile, Wayne Francis, Newark Delaware 19711 (US); Kliman, Harvey Louis, Chadds Ford Pennsylvania 19317 (US)
(74) Representative: Abitz, Walter, Dr.-Ing.

(56) References cited:
- EP-A- 0 107 793
- EP-A- 0 259 870
- DE-A- 3 236 447
- US-A- 3 023 120
- US-A- 4 640 861

## Description

### BACKGROUND

This invention relates to a fluoropolymer resin matrix reinforced with continuous filament fibers and more particularly it relates to structural composites formed from such a resin matrix for use in corrosive high temperature environments.

Although fluoropolymer resins are known to be corrosion resistant in harsh chemical environments, fiber reinforced composites for structural end uses based on these resins have not been considered practical because of the low strength and low bending moduli. Mechanical properties equivalent to conventional composites have not been obtainable.

DE-A-3,236,447 discloses a matrix reinforced with a continuous woven fiber material. The example being given where the matrix is a PTFE on a carbon fiber material. The flexural modulus of this known composite is however not satisfactory.

EP-A-0,259,870 discloses a filament-reinforced polymer which comprises synthetic polymer filaments straightened and arranged substantially in parallel to each other and a fluorine-containing polymer resin to fill the spaces among the individual filaments. The properties of these composites however are also not satisfactory.

It would be highly desirable to provide a composite structure with high stiffness, strength and corrosion resistance suitable for high temperature operating conditions found in harsh chemical environments.

### SUMMARY OF THE INVENTION

A composite comprising a matrix fluoropolymer resin reinforced with continuous filament fibers the fluoropolymer being an ethylene-tetrafluoroethylene copolymer and the ratio of fiber to resin being in the range of from 10 to 70%. Preferably the continuous filament fibers are carbon fibers aligned in an axial direction. Shaped non-planar as well as planar structures formed therefrom are also encompassed. The composite has preferably a flex modulus of greater than 1,397,000 N/cm² (two million psi).

### BRIEF DESCRIPTION OF THE DRAWING

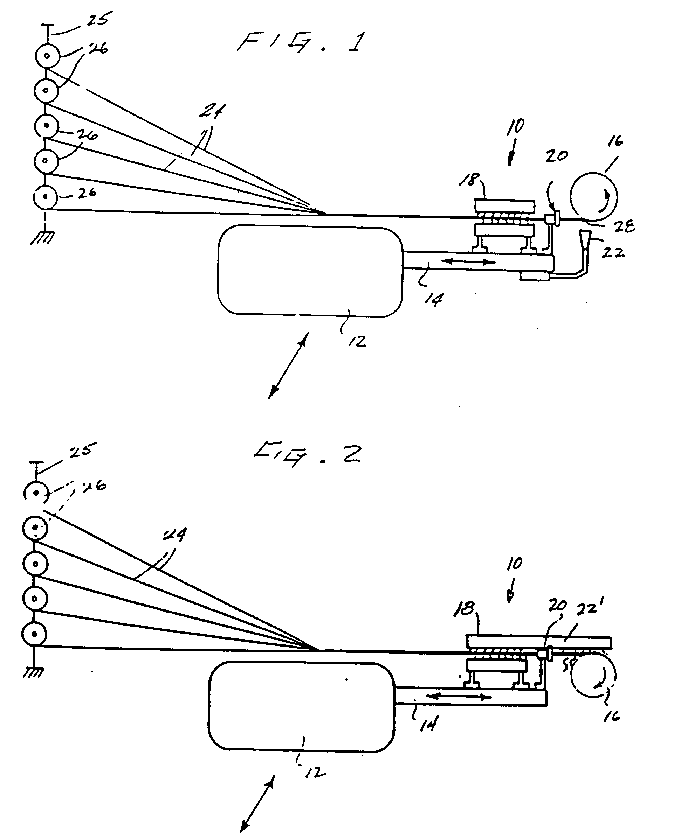

Figs. 1-3 are schematic representations of apparatus suitable for use in the present invention to form non-planar shaped composite structures.

### DETAILED DESCRIPTION OF THE INVENTION

A preferred process for forming a precursor tow of a resin matrix reinforced with continuous filament fibers is disclosed in U.S. Patent No. 4,640,861 wherein a fiber reinforced material is made by passing a preheated tensioned filament array over an arcuate extruder head wherein polymer is flowed through the filament warp array to coat the filaments with polymer.

When forming such a tow of carbon fiber with a fluoropolymer resin, it has been found useful for handling the carbon fiber to apply a lubricating finish prior to preheating the filaments.

Other techniques for applying matrix polymer include sprinkling of powdered resin on the fiber followed by heating to melt the resin or intermingling resin fibers with the continuous filament warp, then heating to melt the resin fibers thereby forming the matrix resin and film stacking.

The composite structure may be made by a variety of procedures. Thus a tow form as described above may be formed into a filament wound structure or a plurality of segments of such tow may be stacked and heated under pressure to form a distinct composite structure.

To form a filament wound structure an apparatus as shown in the drawing and disclosed in European Patent Application publication No. 0,307,215 is used to build a structure from a plurality of lengths of fluoropolymer resin reinforced with continuous filament fibers. More particularly, in Figs. 1-3 the yarn-laying head used in practicing the invention is generally designated by the numeral 10 and is shown to include a traversing carriage 12 upon which is mounted a feed arm 14 movable toward and away from a rotating mandrel 16. The traversing carriage, feed arm, and mandrel are a model W60-16 triple axis filament winder with a N-210 computer by McClean Anderson of Milwaukee, Wis. Mounted to the feed arm are infra-red heaters 28, a heated guide and an open flame heater 22 (Fig. 1).

As carriage 12 is traversed longitudinally of mandrel 16, a plurality of lengths of thermoplastic resin impregnated yarns 24 are pulled from a plurality of supply packages 26 mounted on rolling takeoff creel 25 against a desired level of back tension applied by a mechanism (not shown) associated with the creel for controlling unwind tension on packages 26 such as a Type 800C012 tension compensator by Compensating Tensions Controls, Inc., of West Caldwell, New Jersey.

As the yarn-laying head moves with respect to the structure being wound on mandrel 16, the thermoplastic resin impregnated lengths of yarn 24 are exposed to radiant heaters 18 (model 5535 manufactured by Research Inc. of Minneapolis, Minnesota). In these heaters, the thermoplastic resin is heated to a temperature that is within 10°C of its melt temperature. The lengths of yarn then pass through a heated guide 20 which in the preferred embodiment is a circular eye made of aluminum with a hard anodized finish coated with Teflon®. The guide is wrapped with an electrically operated band heater 20a (such as an MI band heater model MBIEIJNI) which raises the temperature of the thermoplastic to a temperature above its melting point but below its degradation temperature which should be understood to be below the melting point of the reinforcing fibers. Mounted at the forward end of feed arm 14 is an open flame heater 22 (a Vulcan Universal propane torch with a No. 3 tip) over which the tapes 24 pass to the laydown location 28 on the mandrel 16. This heater heats the surface of the part being wound on the mandrel through induced heating of the mandrel and direct heating of lengths of yarn 24 as they travel from the guide 20 to location 28 to ensure molten mating surfaces at laydown location 28.

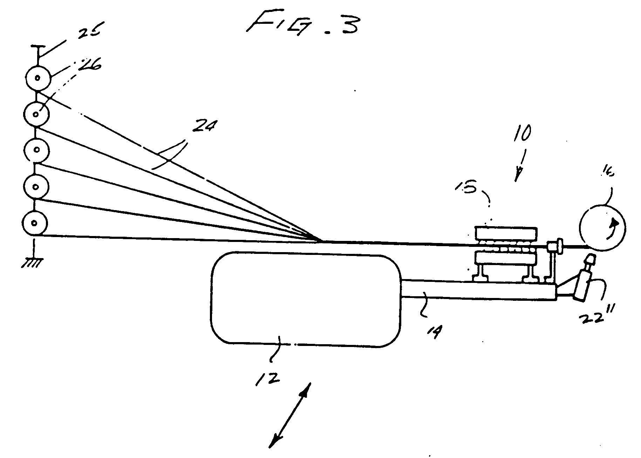

In Fig. 2 the open flame heater 22 is replaced with an infra-red heater 22' (model 5535 by Research Inc.), and in Fig. 3 flame heater 22 is replaced with a hot air gun heater 22'' (Serpentine VI model CHE128767 by Sylvania).

### EXAMPLE I

A tow of Hercules AS4 continuous graphite filaments having approximately 3000 filaments is coated with ethylene-tetrafluoroethylene copolymer using a melt-injection process in the range of 40 to 60% by volume coating level.

Two to four bobbins of the coated tow of these graphite filaments are mounted on rolling take-off creels equipped with a mechanism for controlling unwind tension (Type 800C 012 tension compensator made by Compensating Tension Controls, Inc.). The tow is advanced by means of a rotating elliptical-shaped mandrel downstream and a tension of approximately 19.6 N (2000 gm) is applied to each moving tow by the tension mechanism. The moving tow passes through the "head" portion of the downstream filament winder which contains: (1) a pre-heating section (heated with an infrared heater) which heats the tow to 320° followed by (2) a guide eye which is preheated to 320°C with band heaters, (3) a hot air heating source which is positioned close to the rotating mandrel (3 cm away) and maintains the temprature of the yarn at 320°C, and (4) the tow is finally laid down on an electrically heated mandrel (at about 280°C).

The computer controlled winder is preprogrammed to produce a 1.83 m (6 ft.) long tube with ±45°/90°/±45°/90°/±45°/90° winding angles.

After completing the winding, the mandrel and the tube are cooled for approximately 1 hour until the temperature of the part is about 100°C. These structures performed satisfactorily in corrosive, high temperature environments.

### EXAMPLE II

Coated graphite as prepared in Example I was fabricated by frame winding into 3.175 mm (1/8") thick unidirectional composite plates. These plates were subsequently tested per ASTM test procedure D790. The flexural strength was 37,992.5 N/cm² (55,000 psi) and the flexural modulus was 7.998 million N/cm² (11.6 million psi).

## Claims

1. A composite comprising: a matrix fluoropolymer resin reinforced with continuous filament fibers, the fluoropolymer being an ethylene-tetrafluoroethylene copolymer and the ratio of fiber to resin being from 10 to 70%.

2. The composite as defined in Claim 1 wherein said continuous fibers are axially aligned carbon fibers.

3. The composite as defined in Claim 1 wherein the composite has a flex modulus greater than 1,397,000 N/cm² (two million psi).

## Patentansprüche

1. Verbundstoff umfassend: ein Fluorpolymermatrixharz, welches mit kontinuierlichen Filamentfasern verstärkt ist, wobei das Fluorpolymere ein Ethylen/Tetrafluorethylen-Copolymeres ist und das Verhältnis von Faser zu Harz 10 bis 70 % beträgt.

2. Verbundstoff nach Anspruch 1, bei welchem die genannten kontinuierlichen Fasern axial ausgerichtete Kohlenstoffasern sind.

3. Verbundstoff nach Anspruch 1, bei welchem der Verbundstoff einen Biegemodul von größer als 1 397 000 N/cm² (zwei Millionen psi) aufweist.

## Revendications

1. Un matériau composite comprenant : une matrice de résine de polymère fluoré renforcée par des fibres à filaments continus, le polymère fluoré étant un copolymère d'éthylène/tétrafluoréthylène et le rapport des fibres à la résine étant de 10 à 70 %.

2. Le matériau composite selon la revendication 1 dans lequel lesdites fibres continues sont des fibres de carbone alignées axialement.

3. Le matériau composite selon la revendication 1 dans lequel le matériau composite présente un module de flexion supérieur à 1 397 000 N/cm².
